# EUROPEAN PATENT APPLICATION

(11) **EP 4 722 984 A1**
(43) Date of publication of application: **08.04.2026**
(21) Application number: 25205696.5
(22) Date of filing: 30.09.2025
(51) Int. Cl.: G06N 3/0495, G06N 3/063, G06N 3/082

(54) **ACCELERATOR FOR SELECTIVE WEIGHTS AND INPUT PROCESSING IN NEURAL NETWORKS**

(30) Priority: 03.10.2024 US 202463702847 P; 24.09.2025 US 202519338286
(71) Applicant: Semiconductor Components Industries, LLC, Scottsdale, AZ 85250 (US)
(72) Inventor: COENEN, Ivo Leonardus, 2207 Coffrane, NE (CH)
(74) Representative: Manitz Finsterwald Patent- und Rechtsanwaltspartnerschaft mbB

(57) **Abstract**

According to an aspect, a method includes loading a set of weights of a neural network into a plurality of multipliers selectively loading a set of inputs into the plurality of multipliers based on a weight indication bitstream, and generating, by the plurality of multipliers, multiplication results for a node of the neural network using the set of weights and at least a portion of the set of inputs.

## Description

### FIELD OF THE DISCLOSURE

The present disclosure relates to selective weights and input processing in neural networks.

### BACKGROUND

Neural networks are increasingly used for a variety of signal processing applications, ranging from image recognition and natural language processing to speech recognition and decision-making tasks. The proliferation of neural network implementations has expanded from computing centers and data centers into edge devices such as smartphones, wearables, hearing aids, and other battery-powered devices. A neural network accelerator may be a specialized hardware component configured to speed up the computation of neural networks, particularly the matrix operations (e.g., multiply-accumulate (MAC) operations), and, in some examples, tensor processing, involved in training and/or inference.

Some conventional neural network accelerators may prune and/or compress neural network weights to reduce the model's size, memory footprint, and/or inference time. Pruning may include removing unnecessary weights, resulting in a sparse neural network. However, some conventional neural network accelerators may still use a relatively large amount of computation resources to process sparse networks, which can limit improvements in processing speed. Some conventional approaches load input data for removed weights for MAC operations, which may be computationally expensive.

### SUMMARY

This disclosure relates to an accelerator configured to selectively load input data for multiply-accumulate operations based on which weights have been pruned (e.g., omitted from storage in a memory device) as indicated by a weight indication bitstream. A multiply-accumulate operation includes multiplying an input by a weight and adding the result to an accumulator. The weight indication bitstream may indicate which weights are stored and which weights are omitted (e.g., pruned). In some examples, zero-value values are not included in the weights that are stored in the memory device. The accelerator may disregard or omit the loading of an input corresponding to a weight indicated by the weight indication bitstream as omitted from storage in the memory device, which may reduce overhead, increase computational efficiency, and/or enhance the practical performance and feasibility of neural networks deployed at the edge and/or within data center environments.

Some conventional approaches may process weights and inputs (e.g., all inputs) regardless of whether they contribute meaningful results. However, the neural network accelerator discussed herein may eliminate unnecessary memory access and computations associated with pruned or zero-valued weights by interpreting a weight indication bitstream to determine which weights are stored and which inputs are relevant.

The accelerator may keep active inputs stable while streaming through the stored weights, which may reduce power consumption and/or memory bandwidth and increase the efficiency for edge devices and low-power artificial intelligence (AI) systems. For example, the accelerator may reuse information it has already loaded, instead of reloading the same data multiple times. In other words, the accelerator may retain an input and use that input to calculate several results by combining the input with different weights. This approach may be helpful in devices such as smartphones, earbuds, hearing aids, and/or embedded processors, where battery life preservation and/or efficiency performance are beneficial. The accelerator has a compact size that is compatible with existing computer systems, and, in some examples, may not require changes to how the models are trained. In contrast to some conventional systems that disregard sparsity or execute sparse neural networks inefficiently, the accelerator discussed herein may dynamically adapt to sparse neural networks, while increasing throughput, energy savings, and/or scalability across neural network workloads.

In some aspects, the techniques described herein relate to a method including: loading a set of weights of a neural network into a plurality of multipliers; selectively loading a set of inputs into the plurality of multipliers based on a weight indication bitstream; and generating, by the plurality of multipliers, multiplication results for a node of the neural network using the set of weights and at least a portion of the set of inputs.

In some aspects, the techniques described herein relate to a method, further including: loading a first input of the set of inputs to a first multiplier of the plurality of multipliers based on a first bit of the weight indication bitstream having a first value; not loading a second input of the set of inputs to a second multiplier of the plurality of multipliers based on a second bit of the weight indication bitstream having a second value; and generating, by the first multiplier, a first multiplication result using the first input and a corresponding weight of the set of weights.

In some aspects, the techniques described herein relate to a method, further including: loading a third input of the set of inputs into the second multiplier based on a third bit of the weight indication bitstream having the first value; generating, by the second multiplier, a second multiplication result for the node using the third input and a corresponding weight of the set of weights, wherein the second multiplication result is computed at least partially in parallel with the first multiplication result; and summing the first multiplication result and the second multiplication result.

In some aspects, the techniques described herein relate to a method, wherein the set of inputs is a first set of inputs, the method further including: loading a second set of weights into the plurality of multipliers; and generating, by the first multiplier, a second multiplication result for the node of the neural network using the first input and a corresponding weight of the second set of weights.

In some aspects, the techniques described herein relate to a method, wherein the weight indication bitstream includes a sequence of bits indicating which weights are stored in a memory device of a computing device.

In some aspects, the techniques described herein relate to a method, further including: storing the set of weights and the set of inputs in a first memory device; transferring the set of inputs from the first memory device to a second memory device; retrieving the set of weights from the first memory device; and retrieving the set of inputs from the second memory device.

In some aspects, the techniques described herein relate to a method, wherein the set of inputs are retrieved from the second memory device at least partially in parallel with retrieval of the set of weights from the first memory device.

In some aspects, the techniques described herein relate to a method, further including: retrieving a first portion of the set of weights using a first memory data interface connected to the first memory device; and retrieving a second portion of the set of weights using a second memory data interface connected to the first memory device.

In some aspects, the techniques described herein relate to a neural network circuit including: at least one memory device configured to store a weight indication bitstream; and an accelerator of a neural network configured to: load a set of weights into a plurality of multipliers; selectively load a set of inputs into the plurality of multipliers based on the weight indication bitstream, including: load a first input of the set of inputs to a first multiplier of the plurality of multipliers based on a first bit of the weight indication bitstream having a first value; and not loading a second input of the set of inputs to a second multiplier of the plurality of multipliers based on a second bit of the weight indication bitstream having a second value; and generate, by the first multiplier, a multiplication result for a node of the neural network using the first input and a corresponding weight of the set of weights.

In some aspects, the techniques described herein relate to a neural network circuit, wherein the multiplication result is a first multiplication result, wherein the accelerator is configured to: load a third input of the set of inputs into the second multiplier based on a third bit of the weight indication bitstream having the first value; generate, by the second multiplier, a second multiplication result for the node using the third input and a corresponding weight of the set of weights, wherein the second multiplication result is computed at least partially in parallel with the first multiplication result; and sum the first multiplication result and the second multiplication result.

In some aspects, the techniques described herein relate to a neural network circuit, wherein the at least one memory device includes a first memory device and a second memory device, the first memory device configured to store the set of weights, the second memory device configured to store the set of inputs, wherein the accelerator is configured to: retrieve the set of weights from the first memory device; and retrieve the set of inputs from the second memory device.

In some aspects, the techniques described herein relate to a neural network circuit, wherein the accelerator is configured to retrieve the set of weights from the first memory device at least partially in parallel with retrieval of the set of inputs from the second memory device.

In some aspects, the techniques described herein relate to a neural network circuit, wherein the accelerator is configured to retrieve a first portion of the set of weights using a first memory data interface connected to the first memory device and retrieve a second portion of the set of weights using a second memory data interface connected to the first memory device.

In some aspects, the techniques described herein relate to a neural network circuit, wherein the first memory device includes a data random access memory, and the second memory device includes a local memory.

In some aspects, the techniques described herein relate to a neural network circuit, wherein the node is a first node, and the set of weights is a first set of weights, the first memory device configured to store a plurality of weights in an interleaved manner such that the first set of weights associated with the first node are stored, followed by a first set of weights associated with a second node, followed by a second set of weights associated with the first node.

In some aspects, the techniques described herein relate to a neural network circuit, wherein the set of inputs is a first set of inputs, and the multiplication result is a first multiplication result, wherein the accelerator is configured to: load a second set of weights into the plurality of multipliers; and generate, by the first multiplier, a second multiplication result for the node of the neural network using the first input and a corresponding weight of the second set of weights.

In some aspects, the techniques described herein relate to a non-transitory computer-readable medium storing executable instructions that cause at least one processor to execute operations, the operations including: loading a set of weights of a neural network into a plurality of multipliers; selectively loading a set of inputs into the plurality of multipliers based on a weight indication bitstream, including: loading a first input of the set of inputs to a first multiplier of the plurality of multipliers based on a first bit of the weight indication bitstream having a first value; and not loading a second input of the set of inputs to a second multiplier of the plurality of multipliers based on a second bit of the weight indication bitstream having a second value; and generating, by the first multiplier, a multiplication result for a node of the neural network using the first input and a corresponding weight of the set of weights.

In some aspects, the techniques described herein relate to a non-transitory computer-readable medium, wherein the multiplication result is a first multiplication result, wherein the operations further include: loading a third input of the set of inputs into the second multiplier based on a third bit of the weight indication bitstream having the first value; generating, by the second multiplier, a second multiplication result for the node using the third input and a corresponding weight of the set of weights, wherein the second multiplication result is computed at least partially in parallel with the first multiplication result; and summing the first multiplication result and the second multiplication result.

In some aspects, the techniques described herein relate to a non-transitory computer-readable medium, wherein the operations further include: storing the set of weights and the set of inputs in a first memory device; transferring the set of inputs from the first memory device to a second memory device; retrieving the set of weights from the first memory device; and retrieving the set of inputs from the second memory device, wherein the set of inputs are retrieved from the second memory device at least partially in parallel with retrieval of the set of weights from the first memory device.

In some aspects, the techniques described herein relate to a non-transitory computer-readable medium, wherein the set of inputs is a first set of inputs, and the multiplication result is a first multiplication result, wherein the operations further include: loading a second set of weights into the plurality of multipliers; and generating, by the first multiplier, a second multiplication result for the node of the neural network using the first input and a corresponding weight of the second set of weights.

The foregoing illustrative summary, as well as other exemplary objectives and/or advantages of the disclosure, and the manner in which the same are accomplished, are further explained within the following detailed description and its accompanying drawings.

### BRIEF DESCRIPTION OF THE DRAWINGS

FIG. 1A depicts a neural network system having an accelerator that uses a weight indicator bitstream to selectively load input data into input-weight multipliers according to an aspect.
FIG. 1B illustrates a fully connected neural network according to an aspect.
FIG. 1C illustrates a partially connected neural network having omitted weights according to an aspect.
FIG. 2A illustrates an example of a portion of an accelerator according to an aspect.
FIG. 2B illustrates an example of stored and omitted weights and a weight indication bitstream according to an aspect.
FIG. 2C illustrates an example of another portion of the accelerator according to an aspect.
FIG. 3 illustrates an example of an accelerator according to another aspect.
FIG. 4 illustrates a neural network system according to an aspect.
FIG. 5 illustrates a flowchart depicting example operations for selectively loading input data according to a weight indicator bitstream according to an aspect.

### DETAILED DESCRIPTION

This disclosure relates to an accelerator that uses a weight indication bitstream to control which weights are retrieved from one or more memory devices and which inputs are loaded for multiply-accumulate operations. Unlike some conventional approaches that use static pruning and dense execution paths, the accelerator dynamically interprets the weight indication bitstream to omit (e.g., skip) unnecessary multiplications altogether, which may result in lower memory bandwidth requirements and/or reduced power consumption, while maintaining compatibility with dense model structures.

The accelerator is configured to disregard (e.g., skip over) an input that is pruned for a group of outputs based on the weight indication bitstream. In some examples, weights are read from memory sequentially, and a memory device that stores the weights does not include the weights that have been pruned (or omitted). In some examples, the accelerator may reuse loaded inputs to calculate multiple outputs by keeping each input stable on a multiplier for each calculated output and changing the weight on the multiplier for the next calculation step (e.g., not changing the input). Each calculated output of a respective group has its own accumulator. In some examples, multiple multipliers are used in parallel to process multiple inputs per calculation step.

In some examples, the neural network circuit includes a first memory device accessible by an input fetcher, a weight retriever, and a bias retriever. In some examples, the neural network circuit includes a second memory device. In some examples, the first memory device includes data random access memory, and the second memory device includes a local memory. In some examples, the input data (e.g., the inputs) are stored in the second memory device, and the weights are stored in the first memory device. In some examples, the reading of the weights from the first memory device may occur at least partially in parallel with the reading of the inputs from the second memory device, thereby decreasing execution time. In some examples, the weights are stored in an interleaved way in the first memory device so that the weights can be fetched sequentially.

In some examples, the accelerator described herein is designed to execute heavily pruned neural networks with significantly improved cycle count and reduced power consumption. In some examples, pruning levels of approximately 75% and 87.5% may enable 4× and 8× reductions in execution time, respectively, compared to execution of fully connected networks. This efficiency may be achieved with minimal cycle overhead, for example, an approximately 9% increase in cycle count at 75% sparsity and an approximately 6% memory storage overhead for the weight indication bitstream at similar sparsity levels.

Unlike some conventional architectures that decompress pruned weights by inserting zeros and feeding them into the multiplier array, the techniques discussed herein implements an input skipping mechanism. Weights are stored in a linear, compact format in memory, containing non-zero (non-pruned) weights. These weights may be represented with configurable bit widths (e.g., 6-bit or 8-bit integers). Correspondingly, an input fetcher with pruning control reads a weight indication bitstream that indicates, for each input and for each group of accumulators, whether the input should be fetched or skipped. This results in efficient, selective loading of input data aligned to the actual non-pruned weights.

In some examples, the architecture includes parallel multipliers and accumulators, for example, eight multipliers and eight accumulators operating concurrently, though the number is configurable and scalable. In some examples, loaded inputs are reused across multiple accumulator cycles: for a group of outputs, inputs are held stable at the multiplier inputs while new weights are loaded sequentially for each output neuron in the group. The pruning granularity is aligned with this architecture; that is, pruning decisions apply uniformly across a group of accumulators, which may ensure that inputs are reused efficiently during execution.

To further improve performance, a local memory (e.g., a local RAM) (e.g., two 256×32-bit memories) is employed for loading input data (via a separate bus). The architecture may support sustained throughput approaching the peak multiply-accumulate rate (e.g., 8 MAC operations per cycle) while introducing only minimal performance degradation due to the weight indication bitstream. The output stage of the accelerator may include a bias adder, configurable shift and rounding logic, and selectable activation function blocks supporting functions such as linear, rectified linear unit (ReLU), leaky ReLU, hyperbolic tangent (tanh), and sigmoid. These blocks may operate with configurable precision and rounding behaviors to support a wide range of neural network layer types.

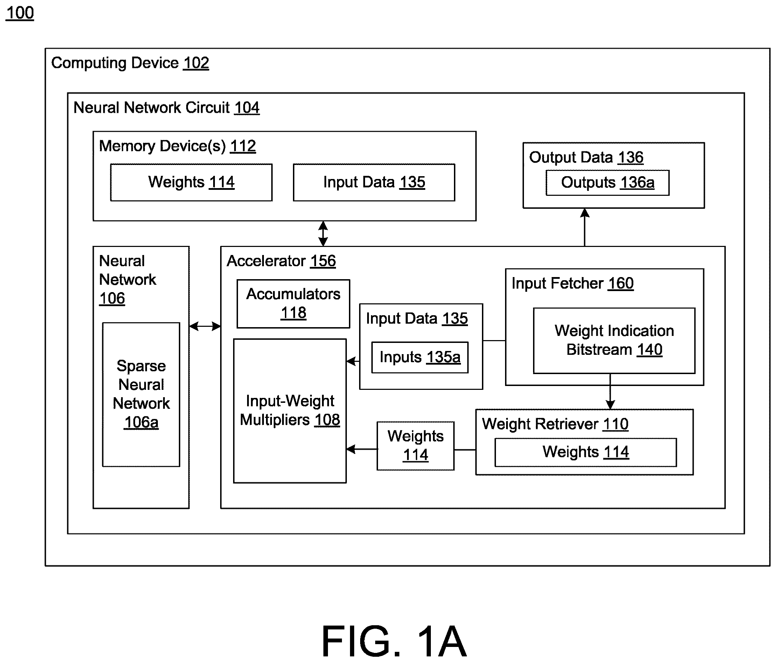

FIGS. 1A to 1C illustrate a neural network system 100 for efficiently managing neural network operations through the selective use of weights 114 and inputs 135a to a neural network 106. The neural network system 100 includes a computing device 102 configured to execute a neural network circuit 104. In some examples, the neural network circuit 104 is a system on chip (SOC) device (e.g., an integrated circuit coupled to a semiconductor substrate). In some examples, the computing device 102 is an edge device such as any type of computing device configured to execute a neural network 106. In some examples, the computing device 102 is a server computer. The neural network circuit 104 includes one or more memory devices 112 and an accelerator 156 configured to execute a neural network 106. The accelerator 156 may be a specialized component configured to increase the speed of execution of the neural network 106.

The memory device(s) 112 stores the weights 114 of the neural network 106. The memory device(s) 112 may also store the input data 135, the output data 136, the weight indication bitstream 140, and/or the bias values. The weights 114 that are stored in the memory device(s) 112 include non-pruned weights, where a non-pruned weight has a value greater than zero. A weight 114 may be an N-bit value such as a 4-bit weight, a 8-bit weight, a 16-bit weight, or a 32-bit weight, where N is any integer greater or equal to four. In some examples, if the weight 114 is a 4-bit weight, a weight of [0000] is a zero-value weight and this weight would not be included in the memory device(s) 112. In some examples, if the weight 114 is a 4-bit weight, a weight of [0010] is a non-zero weight and this weight would be included in the memory device(s) 112.

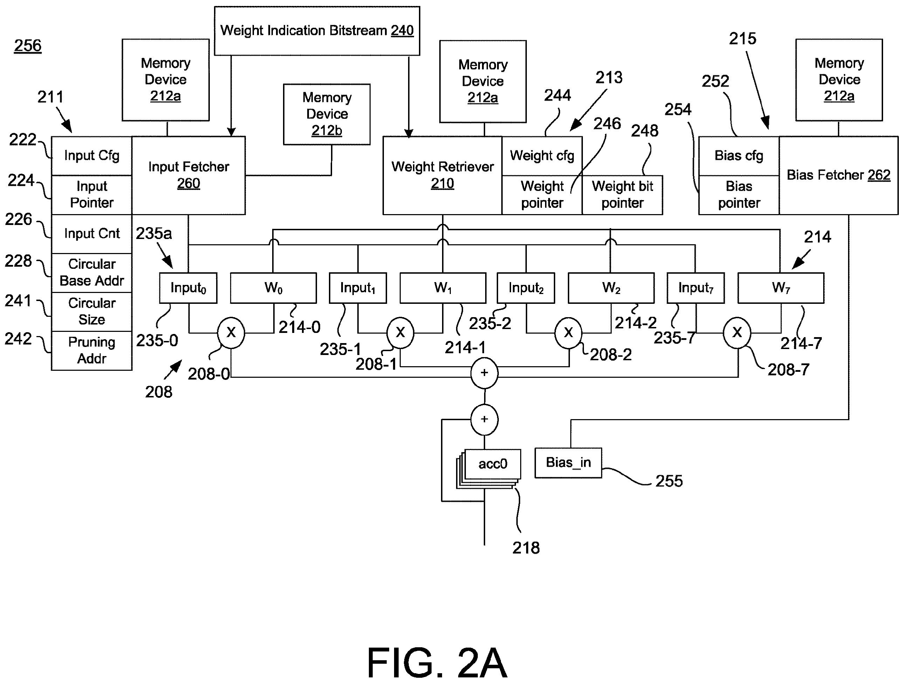

The memory device(s) 112 may include a single memory device or two or more memory devices that store the weights 114, the bias values, the weight indication bitstream 140, the input data 135, and/or the output data 136. In some examples, the memory device(s) 112 include a first memory device (e.g., a memory device 212a of FIGS. 2A to 2C) and a second memory device (e.g., a memory device 212b of FIGS. 2A to 2C). In some examples, the first memory device includes data random access memory, and the second memory device includes a local memory that is smaller than the first memory device. In some examples, the first memory device is referred to as the main memory of an artificial intelligence chip. In some examples, the first memory device is located on the chip (e.g., integrated directly into the same semiconductor die as the processor or accelerator logic). In some examples, the first memory device is located off chip (e.g., located outside the semiconductor die that includes the accelerator 156 but accessed through a package interface). In some examples, the second memory device is a dedicated memory device. In some examples, the second memory device is integrated directly into the same semiconductor die as the accelerator 156. In some examples, the second memory device is not a general-purpose data access memory device, but a smaller, specialized storage block. In some examples, the second memory device includes a distributed set of registers or a distributed set of buffers. In some examples, the inputs 135a (also referred to as input data 135) are stored in the second memory device, and the weights 114 are stored in the first memory device. In some examples, the inputs 135a are transferred (e.g., copied) from the first memory device to the second memory device. In some examples, the reading of the weights 114 from the first memory device may occur at least partially in parallel with the reading of the inputs 135a from the second memory device, thereby decreasing execution time.

In some examples, the first memory device is configured to store the weights 114, bias values, and the input data 135 of a neural network 106, and may be implemented as a system memory, data random access memory, or other large-capacity storage. In contrast, the second memory device may be a dedicated or local memory tightly coupled to the accelerator 156. In some examples, the neural network circuit 104 may initiate transfer of the input data 135 from the first memory device to the second memory device before run-time execution of the accelerator 156. In some examples, the second memory device only stores the input data 135. In some examples, the input fetcher 160 communicates with the second memory device to retrieve the set of inputs 135a (e.g., via a dedicated memory interface), and the weight retriever 110 communicates with the first memory device to retrieve the set of weights 114, where retrieval of the weights 114 occurs at least partially in parallel with the retrieval of the inputs 135a. The use of the second memory device allows faster access and lower power consumption by reducing repeated fetches from the first memory device.

In some examples, the memory devices 112 includes a third memory device configured to store the weights 114. In some examples, the third memory device is another example of the memory device 212b of FIGS. 2A to 2C but is used to store the weights 114 (or a portion thereof). In some examples, the third memory device is the same or similar to the second memory device and may include any of the features described with reference to the second memory device. In some examples, the third memory device only stores the weights 114. In some examples, the neural network circuit 104 may initiate transfer of the weights 114 from the first memory device to the third memory device before run-time execution of the accelerator 156. In some examples, the weight retriever 110 communicates with the third memory device to retrieve the set of weights 114 (e.g., via a dedicated memory interface), and the input fetcher 160 communicates with the second memory device to retrieve the set of inputs 135a, where retrieval of the weights 114 occurs at least partially in parallel with the retrieval of the inputs 135a. The use of the third memory device allows faster access and lower power consumption by reducing repeated fetches from the first memory device.

In some examples, the memory devices 112 includes a fourth memory device configured to store the bias values. In some examples, the fourth memory device is another example of the memory device 212b of FIGS. 2A to 2C but is used to store the bias values (or a portion thereof). In some examples, the fourth memory device is the same or similar to the second memory device and may include any of the features described with reference to the second memory device. In some examples, the fourth memory device only stores the bias values. In some examples, the neural network circuit 104 may initiate transfer of the bias values from the first memory device to the fourth memory device before run-time execution of the accelerator 156. In some examples, a bias retriever communicates with the fourth memory device to retrieve the bias values (e.g., via a dedicated memory interface), and the input fetcher 160 communicates with the second memory device (e.g., via a dedicated memory interface) to retrieve the set of inputs 135a, and the weight retriever 110 communicates with the third memory device (e.g., via a dedicated memory interface) to retrieve the weights 114, where retrieval of the weights 114, the bias values, and the inputs 135a occurs at least partially in parallel with each other.

In some examples, a weight 114 may represent the strength of the connection between units. If the weight 114 from neuron A to neuron B has a greater magnitude, it means that neuron A has greater influence over neuron B. The weights 114 includes a sequence of values, where each weight (or sometimes referred to as weight value) has a particular size (e.g., four-bit, eight-bit, sixteen-bit, etc. weights). The training of the neural network 106 may be updated based on heuristic data. The training results in a set of weights 114 for synapses 138 and biases for a final neuron accumulation. During the training, a weight 114 having a relatively low value is set to zero and not included as part of the stored weights 114 in the memory device(s) 112.

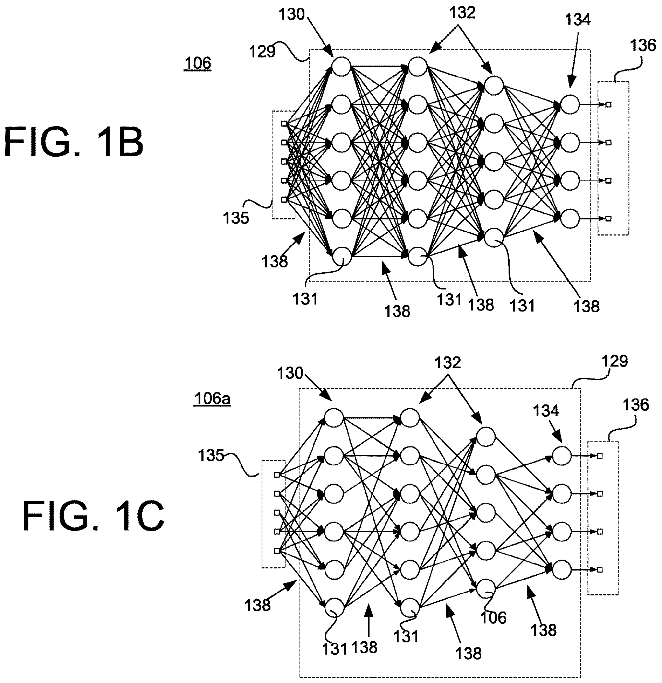

Referring to FIGS. 1B and 1C, the neural network 106 includes multiple layers 129 of neurons 131 that are connected with synapses 138 (also referred to as weights 114, weight factors, or weight values). Because the number of weights 114 is the product of the number of neurons 131 in adjacent layers 129, in some examples, the number of weights 114 may be relatively large, and, as a result, may require a relatively large memory device to store the weights 114. For example, a neural network 106 with more than one hundred thousand weights 114 may require one hundred kilobytes (kB) of memory (e.g., assuming 8-bit weights), which is relatively large for devices with a relatively small memory capacity.

In addition, the number of multiplications (e.g., by input-weight multipliers 108) to be executed may be relatively large, which may cause the speed of execution to be relatively slow and/or require an increased amount of processing power. The number of weights 114 represents the number of MACs (e.g., multiplications and accumulation units) that must be performed to execute the neural network 106 once. A neural network 106 may require a high number of cycles to obtain an output (e.g., over fifty thousand cycles, over one hundred thousand cycles), and the neural network 106 may be required to obtain multiple outputs in a given time frame (e.g., over fifty times per second, over one hundred times per second, etc.). An increase in cycle speed to accommodate the large number of required operations corresponds to an increase in power. Clock speeds for some applications, however, may be restrained to a low rate (e.g., less than one hundred MHz, less than fifty MHz, less than twenty MHz, etc.) to conserve power.

Some of the weights 114 may be pruned (or removed or omitted) to conserve memory of the memory device(s) 112. A neural network 106 may not require all its weights 114 to provide a relatively high level of performance. The smaller weights 114 can typically be pruned (removed) without any performance degradation (or significant performance degradation). When a first neuron value multiplied by a low weight value (e.g., a very low weight value) may have little impact on the accumulated sum even if the first neuron value is very high (e.g., even if the first neuron is highly active). In some examples, these low value weights may be pruned (e.g., removed or omitted) from the neural network 106 without significantly reducing the accuracy of the neural network 106 (if any). This pruning can save processing (e.g., multiplications, additions) and memory requirements. In some examples, a certain percentage (e.g., over 50%, over 70%, over 80%, or over 90%, etc.) of the weights 114 can be pruned without a significant (e.g., any) loss of accuracy). However, the pruning (or removal) of low-value weights 114 may cause the neural network 106 to be irregular (e.g., not fully connected), thereby resulting in a sparse neural network 106a, as shown in FIG. 1C. A sparse neural network 106a is a neural network 106 that is not fully connected, where some of the weights 114 have been pruned. Pruning (also referred to as removing or omitting) may refer to not storing the omitted weights 114 in the memory device(s) 112.

Referring to FIGS. 1B and 1C, the neural network 106 includes a set of computational processes for receiving input data 135 (e.g., inputs 135a) and generating output data 136 (e.g., outputs 136a). In some examples, the input data 135 may refer to an input vector. The inputs 135a may refer to the numeric values that comprise the input vector. The output data 136 may refer to an output vector. The outputs 136a may refer to the numeric values that comprise the output vector. In some examples, each output 136a of the output data 136 may represent a speech command and the input data 135 may represent speech (e.g., audio data in the frequency domain). However, it is noted that the neural network system 100 is not limited to processing audio data, where the neural network system 100 can be applied to any type of system. The neural network 106 includes a plurality of layers 129, where each layer 129 includes a plurality of neurons 131. The plurality of layers 129 may include an input layer 130, one or more hidden layers 132, and an output layer 134. In some examples, in the case of audio processing, each output 136a of the output layer 134 represents a possible recognition (e.g., machine recognition of speech commands or image identification). In some examples, the output data 136 of the output layer 134 with the highest value represents the recognition that is most likely to correspond to the input data 135.

In some examples, the neural network 106 is a deep neural network (DNN). For example, a deep neural network (DNN) may have one or more hidden layers 132 disposed between the input layer 130 and the output layer 134. However, the neural network 106 may be any type of artificial neural network (ANN) including a convolution neural network (CNN). The neurons 131 in one layer 129 are connected to the neurons 131 in another layer via synapses 138. For example, each arrow in FIG. 1B may represent a separate synapse 138. Fully connected layers 129 (such as shown in FIG. 1B) connect every neuron 131 in one layer 129 to every neuron in the adjacent layer 129 via the synapses 138.

Each synapse 138 is associated with a weight 114. A weight 114 is a parameter within the neural network 106 that transforms the input data 135 within the hidden layers 132. As an input 135a enters the neuron 131, the input 135a is multiplied by a weight 114 and the resulting output is either observed or passed to the next layer in the neural network 106. For example, each neuron 131 has a value corresponding to the neuron's activity (e.g., activation value). The activation value can be, for example, a value between 0 and 1 or a value between -1 and +1. The value for each neuron 131 is determined by the collection of synapses 138 that couple each neuron 131 to other neurons 131 in a previous layer 129. The value for a given neuron 131 is related to an accumulated, weighted sum of all neurons 131 in a previous layer 129. In other words, the value of each neuron 131 in a first layer 129 is multiplied by a corresponding weight 114 and these values are summed together to compute the activation value of a neuron 131 in a second layer 129. Additionally, a bias may be added to the sum to adjust an overall activity of a neuron 131. Further, the sum including the bias may be applied to an activation function, which maps the sum to a range (e.g., zero to 1). Possible activation functions may include (but are not limited to) rectified linear unit (ReLu), sigmoid, or hyperbolic tangent (TanH).

However, in FIG. 1C, the neural network 106 is not fully connected, where every neuron 131 in one layer 129 is not connected to every neuron in the adjacent layer 129 via the synapses 138. If a synapse 138 is associated with a pruned weight, that synapse 138 (and consequently the corresponding weight) may be considered pruned or removed from the neural network 106, thereby producing a sparse neural network 106a as shown in FIG. 1C. A sparse neural network 106a may be a partially connected (or irregular) neural network 106.

However, the accelerator 156 discussed herein may efficiently execute a sparse neural network 106a. The accelerator 156 includes a weight retriever 110, an input fetcher 160, input-weight multipliers 108, and accumulators 118. Execution of the input-weight multipliers 108 and the accumulators 118 may be referred to as multiply-accumulate operations. The weight retriever 110 is configured to control which weights 114 are retrieved from the memory device(s) 112 and loaded into the input-weight multipliers 108 using a weight indication bitstream 140. A weight indication bitstream 140 is indicative of which weights 114 are stored in the memory device(s) and which weights 114 are omitted (e.g., pruned) from storage in the memory device(s) 112. In some examples, the weight indication bitstream 140 may refer to pruning information or pruning information stream. The weight indication bitstream 140 may include a sequence of bits, where each bit has a first value (e.g., "1") indicating that a weight 114 is stored in the memory device(s) 112 or a second value (e.g., "0") indicating that a weight 114 is not stored (e.g., pruned) in the memory device(s) 112.

The input fetcher 160 is configured to also use the weight indication bitstream 140 to selectively load input data 135 from the memory device(s) 112 into the input-weight multipliers 108. Selectively load includes omitting the loading of input data 135 for weights 114 indicated by the weight indication bitstream 140 as omitted from storage in the memory device(s) 112.

In some examples, the input data 135 (e.g., all input data) is copied from the first memory device to the second memory device (e.g., the local memory). In some examples, the first memory device includes data random-access memory or static random-access memory. In some examples, the first memory device stores the weights 114, the input data 135, the output data 136, and the weight indication bitstream 140, and the input data 135 is transferred to (e.g., copied to) the second memory device. When weight pruning is used, the weight indication bitstream 140 is read from the first memory device (e.g., using a pruning address pointer). The input fetcher 160 may fetch the weight indication bitstream 140 from the first memory device (e.g., once) during the execution of the neural network 106. Each bit in the weight indication bitstream 140 may indicate whether an input 135a for a current set of outputs 136a is used, or not used (e.g., skipped over).

In some examples, the input fetcher 160 loads a set of inputs 135a (e.g., a first set of inputs 135a) (e.g., eight or less unless the configured number of inputs 135a is reached) from the second memory device and the weight retriever 110 reads the weights 114 from the first memory device (e.g., eight 8-bit weights can be read in a single cycle). The inputs 135a and the weights 114 are then multiplied and accumulated for the outputs 136a that are being calculated (e.g., up to eight at a time).

When all the loaded inputs 135a of the first set have been multiplied with the weights 114 of each output 136a, then the next set of inputs 135a (e.g., a second set of inputs 135a) are loaded. In some examples, the second set of inputs 135a is read in advance from the second memory device so that the second set of inputs 135a can be loaded in together with the next set of weights 114, resulting in sustained 8 MAC/s until all inputs 135a have been processed. In some examples, the fetching of the weight indication bitstream 140 may halt fetching of the weights 114 from time to time, which may cause the average MAC/cycle throughput to be reduced.

In some examples, the computing device 102 is a speech recognition device. In some examples, the computing device 102 is a hearing aid device. The neural network circuit 104 is configured to receive an audio input and determine an audio speech command based on the audio input. In some examples, the computing device 102 utilizes the neural network 106 to improve recognition of commands spoken by a user. Based on a recognized command (e.g., volume up), the computing device 102 may perform a function (e.g., increase volume). Additionally, or alternatively, the computing device 102 may utilize the neural network 106 to improve recognition of a background environment. Based on a recognized environment, the computing device 102 may (automatically) perform a function (e.g., change a noise cancellation setting). The use of the accelerator 156 may decrease the power consumption required for computing the neural network 106, which may be required frequently for speech recognition scenarios described. The reduced power may be advantageous for relatively small devices with relatively low power consumption and relatively small battery capacity (e.g., hearing aids).

In some examples, the computing device 102 using the neural network 106 and the accelerator 156 may improve speech recognition (e.g., voice commands) or sound recognition (e.g., background noise types) in a power efficient way (e.g., to conserve battery life). In some examples, the accelerator 156 is a semiconductor (i.e., hardware) platform (i.e., block) that aids a processor in implementing the neural network 106. The accelerator 156 includes hard coded logic and mathematical functions that can be controlled (e.g., by a state machine configured by a processor) to process the neural network 106. In some examples, the accelerator 156 can process the neural network 106 faster and more (power) efficiently than conventional software running on, for example, a digital signal processor (DSP). A DSP approach may require additional processing/power resources to fetch software instructions, perform computations sequentially, and perform computations using a bit depth that is much higher than may be desirable for a particular application. Instead, in some examples, the accelerator 156 avoids fetching software instructions, performs processing (e.g., computations) in parallel, and processes using a bit depth for a neural network 106 suitable for a particular application.

Neural networks 106 (e.g., deep neural networks) may require a very large number of operations (e.g., between ten and one hundred thousand or greater than one hundred thousand) to compute an inference. Further, a neural network 106 may require reaching many computations per second in order to respond to a stream of input data. In some examples, the neural network 106 may require more than two hundred thousand to obtain an output and an output must be obtained every ten milliseconds, which may require a relatively large amount of power. However, the accelerator 156 discussed herein may reduce power consumption by processing multiple neurons 131 at the same time while keeping the input data at the input-weight multipliers 108 stable for multiple cycles. Holding the input data stable decreases the amount of toggling at the inputs of the multipliers. As a result, less power may be consumed (i.e., less than if it were not held stable). The accelerator 156 may also reduce power consumption by performing multiple multiplications in parallel (e.g., execution of the input-weight multipliers 108 may be performed at least partially in parallel). This parallelism reduces the amount of clocking necessary for the accumulators. As a result, less power is consumed (i.e., less than without the added parallelism).

In some examples, the neural network 106 is a representation of a model rather than a physical structure on the integrated circuit. The neural network 106 may be characterized by a plurality of weights 114, bias values, and other learned parameters that define how inputs 135a are transformed into outputs 136a. These values are stored in memory and interpreted by hardware logic of the accelerator 156, but the neural network 106 itself is not hardwired into the chip. Instead, the accelerator 156 provides a configurable execution engine that applies stored weight values, bias values, and related information to input data, thereby implementing the functionality of the neural network model during inference or training.

FIGS. 2A to 2C illustrate an example of an accelerator 256 according to another aspect. The accelerator 256 may be an example of the accelerator 156 of FIGS. 1A to 1C and may include any of the details discussed with reference to those figures. The accelerator 256 includes an input fetcher 260, a weight retriever 210, a bias fetcher 262, and a memory device 212a. In some examples, the memory device 212a includes main memory. In some examples, the memory device 212a is an example of the first memory device discussed with reference to FIGS. 1A to 1C. In some examples, the memory device 212a includes a data random-access memory. In some examples, the memory device 212a includes a static random access memory. In some examples, the memory device 212a includes a neural network subsystem (NNS) data random-access memory. In some examples, the memory device 212a includes a multi-bank random-access memory (RAM) connected to the accelerator 256 via one or more memory bus interfaces.

In some examples, the memory device 212a stores the inputs 235a (also referred to as input data) and the weights 214. In some examples, the memory device 212a stores bias data 255 (e.g., one or more biases) retrieved by the bias fetcher 262. The input fetcher 260, the weight retriever 210, and the bias fetcher 262 are configured to communicate with the memory device 212a via one or more memory bus interfaces (e.g., shared data buses). In some examples, the accelerator 256 includes two memory bus interfaces (e.g., one for even addresses, one for odd addresses) connected to the memory device 212a, which are shared for reading the input data (e.g., inputs 235a), the weights 214, and the bias data 255. In some examples, the memory device 212a stores the weight indication bitstream 240. In some examples, the weight indication bitstream 240 includes one bit of information for each input 235a and that for each group of outputs 236a that are calculated together (e.g., the number of accumulators 218).

In some examples, the accelerator 256 includes a memory device 212b, which is separate from the memory device 212a. The memory device 212b may be an example of the second memory device of FIGS. 1A to 1C. In some examples, the memory device 212b is a local memory or an internal cache. In some examples, the memory device 212b includes a random access memory (RAM) device. In some examples, the memory device 212b also stores the inputs 235a. In some examples, the inputs 235a are transferred (e.g., copied) from the memory device 212a and stored in the memory device 212b to enable the weights 214 and the inputs 235a to be retrieved at least partially in parallel. In some examples, the accelerator 256 includes two data buses connected between the input fetcher 260 and the memory device 212b (e.g., one for even addresses and one for odd addresses).

The weight retriever 210 is configured to load a set of weights 214 into a plurality of input-weight multipliers 208. In some examples, the weight retriever 210 uses a weight indication bitstream 240 to determine the total number of weights 214 to be loaded for each output. In some examples, the weight indication bitstream 240 is stored in the memory device 212a. The input-weight multipliers 108 may be arithmetic logic blocks that perform fixed-point multiplications between each selected input 235a and its corresponding retrieved weight 114.

The weight indication bitstream 240 may be a binary bit sequence in which each bit corresponds to an input index for a group of output nodes. A bit value of "1" indicates that a weight 214 is stored for the corresponding input 235a, while a bit value of "0" indicates that the weight 214 is omitted. In some examples, the weight indication bitstream 240 is read sequentially to determine which inputs 235a and weights 214 to process. The selective omission of the weights 214 not only saves memory and bandwidth but also allows input reuse for those inputs 235a associated with multiple outputs.

In some examples, the weight retriever 210 obtains the weight indication bitstream 240 from the memory device 212a. The weight retriever 210 is configured to execute based on weight retriever data 213, which provides control parameters and/or state information for retrieving weights 214 during neural network execution. The weight retriever data 213 may include weight configuration data 244, which specifies operational settings such as weight precision (e.g., 6-bit, 8-bit formats) and storage format (e.g., linear, interleaved). The weight pointer 246 stores the current memory address or starting location for the next set of weights 214 to be retrieved from memory device 212a or 212b.

The weight retriever data 213 may also include a weight bit pointer 248, which provides an index or offset into the weight indication bitstream 240. In some examples, the weight indication bitstream 240 is used to determine whether a corresponding weight 214 has been pruned, which may enable the accelerator 256 to skip unnecessary weight fetches and computation for pruned connections. The weight retriever 210 may operate efficiently with interleaved weight storage, where weights 214 for multiple output neurons are stored adjacently in groups, allowing the weight retriever 210 to sequentially access weights 214 aligned with the parallel processing of the input-weight multipliers 208. This weight storage mechanism may support high-throughput memory access patterns and enable tight coupling between pruning metadata and weight data during pruned neural network execution.

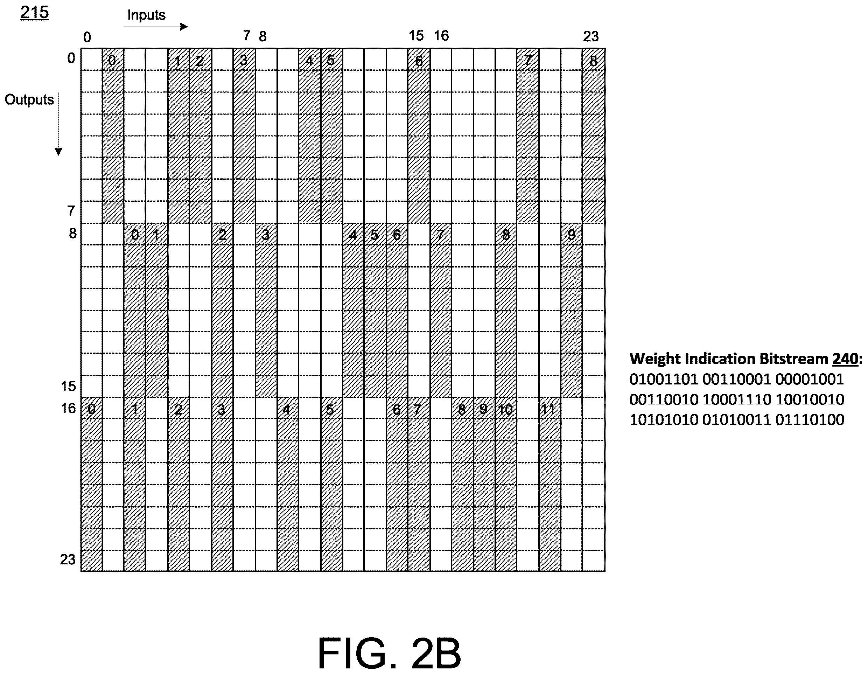

For a weight 214 that is stored in the memory device 212a, loading the weight 214 may refer to retrieving a weight 214 stored in the memory device 212a and transferring the retrieved weight 214 into an input-weight multiplier 208. In some examples, if the weight indication bitstream 240 indicates that a pruned weight, the weight retriever 210 may skip the weight retrieval step for the omitted weight. In some examples, the weights 214 are loaded sequentially as the weights 214 that are pruned are not stored in the memory device 212a. In some examples, the weight indication bitstream 240 is used by the weight retriever 210 to determine the number of weights 214 to be multiplied in total for each output 236a (or group of outputs 236a, since each group of outputs 236a have the same weight positions pruned). FIG. 2B illustrates a weight matrix 215 with a plurality of weights 214. The patterned locations represent weights 214 that are stored in the memory device 212a, and the white locations represent the weights 214 that are not stored in the memory device 212a (e.g., pruned or omitted). The example of FIG. 2B indicates a sparse weight matrix (e.g., 24x24 sparse weight matrix) having a plurality of weights 214 (e.g., 248 of 576 weights (e.g., 57% sparsity)). The numbers in the patterned locators represent the order in which the weights 214 are stored in the memory device 212a. Also, FIG. 2B illustrates a weight indication bitstream 240 according to an aspect. The weight indication bitstream 240 includes a sequence of bits, where each bit is a first value (e.g., zero) or a second value (e.g., one). A bit having a first value may indicate that the weight 214 has been pruned (e.g., removed from storage), and a bit with a second value may indicate that the weight 214 is stored (e.g., not pruned) (or vice versa).

In some examples, with respect to the example of FIG. 2B, the weights 214 may be stored as follows: weights 0 to 7 for 1st neuron, weights 0 to 7 for 2nd neuron, and, so forth, to weights 0 to 7 for 8th neuron, then weights 8 to 15 for 1st neuron, weights 8 to 15 for 2nd neuron, and, so forth, to weights 8 to 15 for 8th neuron, and, so forth, to the last weights 214 of the 1st neuron, the last weights 214 of the 2nd neuron, and, so forth, to the last weights 214 of the 8th neuron. Then, the weights 0 to 7 of the 9th neuron, the weights 0 to 7 of the 10th neuron, and, so forth, to the last weights 214 of the last neuron.

As used herein, interleaved storage of weights 214 may refer to a memory organization scheme in which weights 214 corresponding to multiple output neurons (e.g., neurons 131) are stored in a sequential, alternating pattern in the memory device 212a such that subsets of weights 214 for different neurons are grouped together in the memory device 212a. For a neural network layer having a plurality of output neurons, each requiring a corresponding set of weights 214 for a given input vector, interleaved storage departs from some conventional approaches where weights 214 (e.g., all weights) for one neuron are stored contiguously.

In an interleaved storage scheme, the memory device 212a is organized such that a first group of weights 214 (e.g., weights 0 through 7) for a first neuron is stored, followed (e.g., immediately followed) by the first group of weights for a second neuron, then the first group of weights for a third neuron, and so on for a predetermined group of neurons. Next, a second group of weights (e.g., weights 8 through 15) for the first neuron is stored, followed by the second group of weights for the second neuron, and so forth. This pattern continues until all weights 214 for all neurons have been stored. The interleaving granularity is determined by the group size (e.g., eight weights per group), and the number of neurons processed in parallel (e.g., eight neurons), such that the memory device 212a stores a complete group of weights 214 for all neurons before progressing to the next group of weights.

In other words, the weights 214 are stored in the memory device 212a in an interleaved manner such that subsets of the weights 214 for a plurality of output neurons are stored sequentially in groups corresponding to a predetermined group of weights 214 before proceeding to subsequent subsets of the weights 214 for the plurality of output neurons. In some examples, the interleaved manner includes storing weights 0 through N for a first output neuron, followed by weights 0 through N for a second output neuron, and so forth for the plurality of output neurons, and then storing weights N+1 through 2N for the first output neuron, followed by weights N+1 through 2N for the second output neuron, and so forth for the plurality of output neurons. In some examples, the weights 214 are stored in the memory device 212a in an interleaved manner to facilitate sequential retrieval of the weights 214 corresponding to a plurality of output neurons for parallel processing by the neural network circuit. In some examples, the interleaved manner aligns with a number of parallel multipliers such that a sequential memory access retrieves a group of weights 214 corresponding to a set of output neurons processed concurrently by the neural network circuit. In some examples, the interleaved manner stores groups of weights 214 for the plurality of output neurons adjacently in the memory device 212a such that each group comprises weights 214 associated with a corresponding subset of inputs 235a for each of the plurality of output neurons.

As shown in FIG. 2A, the input-weight multipliers 208 may include eight multipliers, e.g., a first input-weight multiplier 208-0, a second input-weight multiplier 208-1, a third input-weight multiplier 208-2, a third input-weight multiplier, a fourth input-weight multiplier, a fifth input-weight multiplier, a sixth input-weight multiplier, a seventh input-weight multiplier, and an eighth input-weight multiplier 208-7. Although eight input-weight multipliers 208 are depicted in FIG. 2A, the number of input-weight multipliers 208 may be an integer, including two, four, sixteen, thirty-two, etc.

Referring to FIGS. 2A and 2B, in some examples, the weight retriever 210 may use the first eight bits (01001101) of the weight indication bitstream 240 to selectively retrieve the first set of weights 214 for the plurality of input-weight multipliers 208. The first set of weights 214 may include a first weight 214-0, a second weight 214-1, a third weight, a fourth weight, a fifth weight, a sixth weight, a seventh weight, and an eighth weight 214-7. As shown in FIG. 2B, the first weight 214-0, the third weight 214-2, the fourth weight, and the seventh weight have been pruned (e.g., not included in the memory device 212b). In some examples, the weight retriever 210 may retrieve the second weight 214-1, the fifth weight, the sixth weight, and the eighth weight 214-7 from the memory device 212a and load these weights into the second input-weight multiplier 208-1, the fifth input-weight multiplier, the sixth input-weight multiplier, and the eighth input-weight multiplier 208-7. Since the first weight 214-0, the third weight 214-2, the fourth weight, and the seventh weight have been pruned from storage, the weight retriever 210 does not load any weights for the first input-weight multiplier 208-0, the third input-weight multiplier 208-2, the fourth input-weight multiplier, and the seventh input-weight multiplier.

The input fetcher 260 is configured to selectively load a set of inputs 235a into the plurality of input-weight multipliers 208 using the weight indication bitstream 240. Inputs 235a may refer to the numerical values supplied as inputs to a neural network layer. These inputs 235a may be fixed-point values (e.g., 8-bit or 16-bit fixed-point values) and correspond to neuron activations or outputs from a previous neural layer. The input fetcher 260 is configured to selectively retrieve the inputs 235a based on the weight indication bitstream 240 that indicates which inputs 235a are active. The weight indication bitstream 240 may be applied uniformly across a group of outputs 236a.

In some examples, the input fetcher 260 obtains the weight indication bitstream 240 from the memory device 212a. In some examples, the input fetcher 260 obtains the weight indication bitstream 240 from the memory device 212b. In some examples, the input fetcher 260 is configured to execute using input fetcher data 211, which provides the control information and parameters necessary for fetching input data during neural network execution. The input fetcher data 211 may include input configuration data 222, which specifies operational modes and precision settings for input fetching; an input pointer 224, which identifies the current memory address or location of the next input to be fetched; an input count 226, which indicates a count of remaining inputs to be processed; a circular base address 228, which defines the starting address for a circular buffer used to store prefetched input data; and a circular size 241, which defines the size or capacity of the circular buffer.

The input fetcher data 211 may also include a pruning address 242, which provides a pointer to the weight indication bitstream 240 that controls selective input fetching based on pruning decisions. In some examples, the input fetcher 260 uses the pruning address 242 to retrieve the weight indication bitstream 240 that indicates, for each input 235a in a group of accumulator cycles, whether that input should be loaded or skipped, enabling efficient execution of pruned neural networks by fetching only the relevant inputs needed for non-pruned connections. For an input 235a having a corresponding weight 214 that is stored in the memory device 212a, selectively loading may refer to retrieving an input 235a stored in the memory device 212a or the memory device 212b and transferring the input 235a into a corresponding input-weight multiplier 208. In some examples, the inputs 235a are retrieved from the memory device 212b. In some examples, the inputs 235a are retrieved at least partially in parallel with the retrieval of the corresponding weights 214. In some examples, the inputs 235a are retrieved from the memory device 212a. If the weight indication bitstream 240 indicates that an input 235a is associated with a pruned weight, selectively loading may refer to skipping the input retrieval step for the omitted weight.

Referring to FIGS. 2A and 2B, the weight retriever 210 may use the first eight bits (01001101) of the weight indication bitstream 240 to selectively retrieve the first set of inputs 235a for the plurality of input-weight multipliers 208. The first set of inputs 235a may include a first input 235-0, a second input 235-1, a third input 235-2, a fourth input, a fifth input, a sixth input, a seventh input, and an eighth input 235-7. The weight indication bitstream 240 indicates that the first weight 214-0, the third weight 214-2, the fourth weight, and the seventh weight have been pruned from storage. In some examples, the input fetcher 260 may retrieve the second input 235-1, the fifth input, the sixth input, and the eighth input 235-7 from the memory device 212a and load these inputs 235a into the second input-weight multiplier 208-1, the fifth input-weight multiplier, the sixth input-weight multiplier, and the eighth input-weight multiplier 208-7, respectively. Since the first weight 214-0, the third weight 214-2, the fourth weight, and the seventh weight have been pruned from storage, as indicated by the weight indication bitstream 240, the weight retriever 210 does not load the first input 235-0, the third input 235-2, the fourth input, and the seventh input for the first input-weight multiplier 208-0, the third input-weight multiplier 208-2, the fourth input-weight multiplier, and the seventh input-weight multiplier, respectively.

For a set of inputs 235a, the bias fetcher 262 is configured to retrieve bias data 255 from the memory device 212a. The bias data 255 may include bias values. A bias value (or sometimes referred to as a bias) is a term added to the weighted sum before the activation function. The bias value allows the output of a neuron (e.g., a node) to be shifted independently of the weighted inputs. The bias value may be an X-bit digital value, which has the same bit-width (and, in some examples, the same numeric format) as a weight 214. The bias fetcher 262 may retrieve the bias data 255 using bias configuration data 252 and a bias pointer 254. The bias pointer 254 may identify the location of stored biases. As shown in FIG. 2A, the accumulators 218 are configured to accumulate the outputs of the input-weight multipliers 208. For example, for the first set of weights 214 and the first set of inputs 235a, the accumulators 218 add the results of the second input-weight multiplier 208-1, the fifth input-weight multiplier, the sixth input-weight multiplier, and the eighth input-weight multiplier 208-7.

In response to a group of inputs 235a (e.g., a first set of inputs 235a) being fetched and loaded to an input-weight multiplier 208, the group of inputs 235a remains stable across multiple clock cycles while successive weights 114 are streamed to the multiplier's second input port. This allows one input 235a to contribute to multiple output nodes efficiently, which is especially beneficial when multiple outputs share the same non-zero input. Each multiplier output is provided to a corresponding accumulator 218. Each accumulator 118 integrates the product of input-weight multiplication over time for a given output node. Accumulators 218 are typically implemented using 35-bit or 44-bit signed registers to ensure adequate precision and prevent overflow.

For example, in a first cycle, eight synapses (e.g., eight weights 214) associated with a first neuron are multiplied with eight inputs 235a (e.g., layer inputs) and the sum is stored in one of the accumulator registers. In a next cycle, a different set of synapses (e.g., different weights 214) associated with a second neuron is multiplied with the (same) eight inputs 235a and the accumulated sum is stored in the next register of the accumulator registers. This process is repeated until all accumulator registers are written. Accumulator output may include bias addition and activation logic described next.

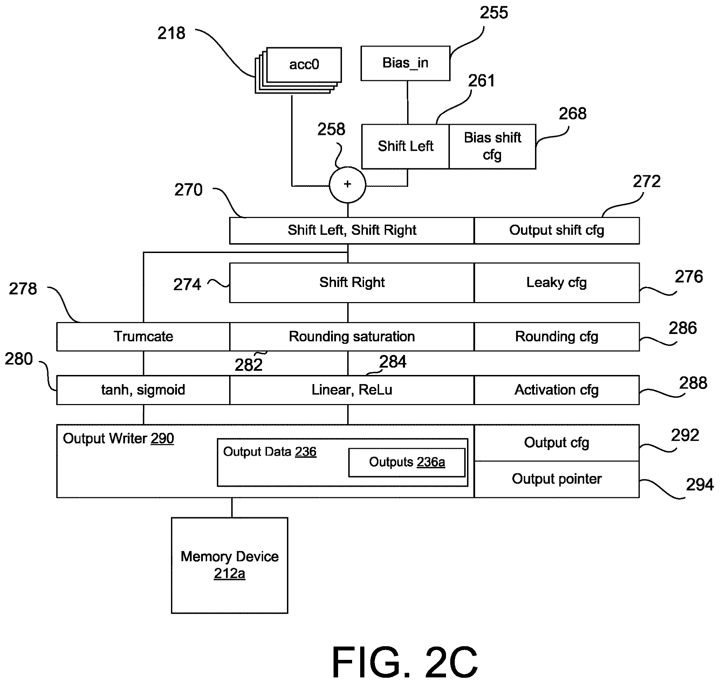

As shown in FIG. 2C, the accelerator 256 includes a shifter 261, an adder 258, a shifter 270, and a shifter 274, each configured to perform specific operations in the output processing stage. The shifter 261 is configured to execute a shift operation, such as a left shift operation, on the bias data 255. The amount of shift is determined by bias shift configuration data 268, which specifies how many positions the bias data 255 should be shifted. The shifter 261 may shift left by a programmable number of bits, for example, to scale the magnitude of the bias data 255 before it is combined with accumulated values.

The adder 258 is configured to add the output of the accumulators 218 and the output of the shifter 261 to generate a bias-adjusted accumulated result. The output of the adder 258 is provided to shifter 270. The shifter 270 is configured to perform a shift operation, such as a left shift or a right shift, on the output of the adder 258. The amount and direction of this shift is determined by output shift configuration data 272, which specifies the scaling applied to the summed result before output rounding or activation functions are applied. The output of shifter 270 is then provided to shifter 274. The shifter 274 is configured to perform a further shift operation on the output of shifter 270 according to leaky configuration data 276. The shifter 274 may implement scaling behavior associated with a rectified linear unit (ReLU) or a similar activation function, where negative outputs are divided by a programmable power-of-two divisor by performing a right shift.

In some examples, the leaky configuration data 276 determines whether and by how much the output of shifter 270 is reduced for negative values, allowing fine-grained configuration of leaky activation behavior using a simple shift operation. In some examples, the shifter 261, the shifter 270, and the shifter 274 provide a flexible, low power means of scaling and adjusting the bias data 255 and accumulated results before the application of the activation function(s), supporting various neural network layer implementations. The configuration data (e.g., the bias shift configuration data 268, the output shift configuration data 272, and/or the leaky configuration data 276) may be programmable and may be provided by the neural network circuit controller to configure the behavior of the accelerator 256 to different layer parameters or data precision requirements.

In some examples, the accelerator 256 is configured to execute a truncate operation 278 on the output of the shifter 274. The truncate operation 278 is configured to reduce the bit width of the result by discarding less significant bits beyond a target precision. For example, the truncate operation 278 may truncate a higher precision intermediate result, such as a 44-bit value, to an 8-bit, 16-bit, or 32-bit output value aligned with the output data format expected by subsequent processing stages or memory storage. The amount of truncation may depend on the configuration of the neural network layer being executed and may serve to enforce a desired fixed-point representation or quantization level. In some examples, the accelerator 256 is further configured to execute an activation function operation 280 on the output of the truncate operation 278.

The activation function operation 280 may apply a selectable non-linear transformation to the truncated result, for example, a rectified linear unit (ReLU), a leaky ReLU, a sigmoid, a hyperbolic tangent (tanh), or a linear pass-through function. The activation function operation 280 may be implemented using a lookup table or dedicated logic configured to transform the truncated value into an output 236a consistent with the selected activation function. In this manner, the truncate operation 278 and activation function operation 280 may ensure that the output of the accelerator 256 is correctly quantized and transformed according to the requirements of the neural network layer being executed, supporting a range of precision levels and activation behaviors while maintaining efficient hardware implementation.

In some examples, the accelerator 256 is configured to execute a rounding saturation operation 282 on the output of the shifter 274 according to rounding configuration data 286. The rounding saturation operation 282 applies a programmable rounding mode to adjust the precision of the output prior to storage or further processing. The rounding configuration data 286 may specify the rounding mode, such as round-to-nearest, truncate, or round toward zero, and may control whether saturation logic is applied to constrain the result within defined numeric limits, such as clamping the result to the maximum or minimum representable value when overflow or underflow occurs.

In some examples, the accelerator 256 is configured to execute an activation function 284 on the output of the rounding saturation operation 282 using activation configuration data 288. The activation function 284 applies a selectable non-linear transformation, such as a ReLU, a leaky ReLU, a sigmoid, a hyperbolic tangent (tanh), or linear transformation, to the rounded and saturated result, with the specific function determined by the activation configuration data 288. The activation configuration data 288 may include mode selection bits that enable dynamic selection of the desired activation function type for each layer or neural network operation. In some examples, the accelerator 256 includes an output writer 290 configured to generate output data 236 based on the output of the activation function operation 280 and the activation function 284.

The output writer 290 is configured to format, align, and write the output data 236 to the appropriate memory location or next processing stage. In some examples, the output writer 290 uses output configuration data 292 and an output pointer 294 to determine the data format, output bit width, and target memory address or buffer location for the output data 236, which may enable flexible and efficient integration into the memory subsystem or downstream layers of the neural network.

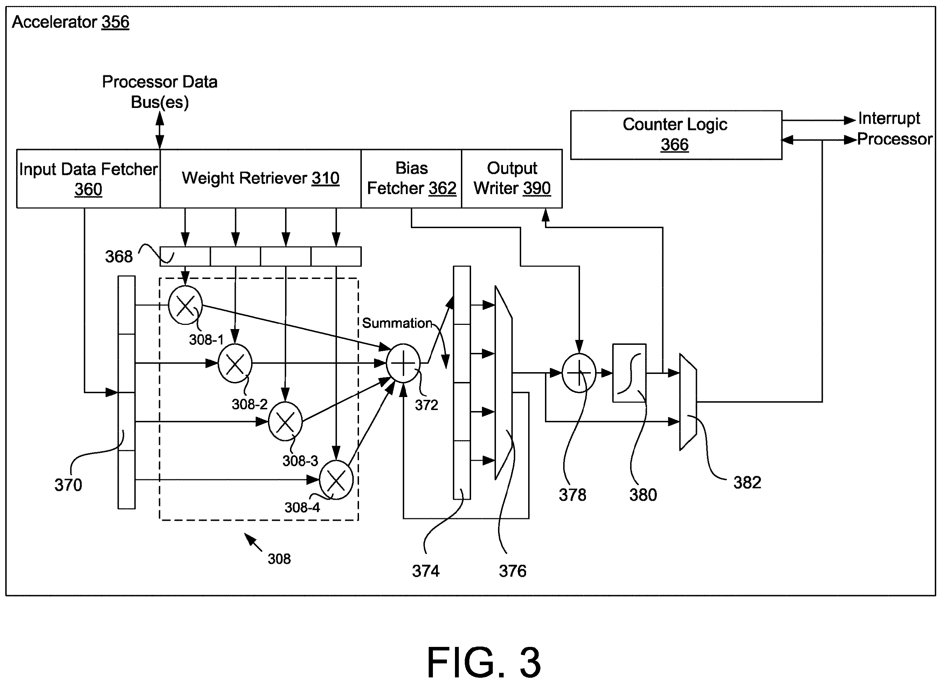

FIG. 3 illustrates an accelerator 356 according to another aspect. The accelerator 356 may be an example of the accelerator 156 of FIGS. 1A to 1C and/or the accelerator 256 of FIGS. 2A to 2C and may include any of the details discussed with reference to those figures.

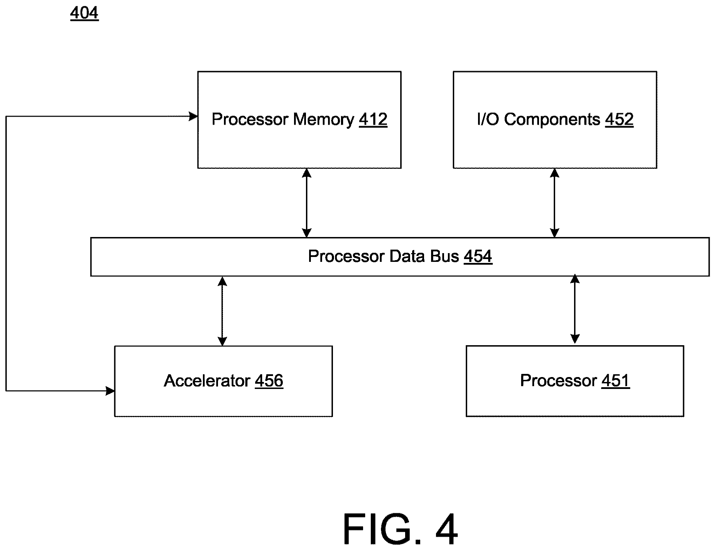

The accelerator 356 includes an input data fetcher 360, a weight retriever 310, a bias fetcher 362, and an output writer 390. Also, the accelerator 356 includes a counter logic 366 configured to generate an interrupt command and interface with a processor memory (e.g., a processing memory 412 of FIG. 4). Each of the input data fetcher 360, the weight retriever 310, the bias fetcher 362, and the output writer 390 may interface with a processor data bus (e.g., a processor data bus 454 of FIG. 4). In some examples, the input data fetcher 360 is a circular buffer configured to receive input data. In some examples, the input data includes audio samples in a frequency domain. The input data fetcher 360 can hold the audio length on which the neural network is executed (e.g., 0.4 to 2 seconds).

In some examples, the input data fetcher 360 is further configured to operate as an input skipping mechanism that selectively loads input data from the circular buffer based on the weight indication bitstream indicating which inputs are relevant for a group of neurons being processed. This selective input fetching reduces unnecessary memory access and computation for pruned connections, improving performance and power efficiency when executing sparse neural networks.

The weight retriever 310 may retrieve the weights from the processor memory. The accelerator 356 also includes input registers 370 configured to receive input data from the input data fetcher 360, and weight registers 368 configured to receive the weights from the weight retriever 310. In some examples, the weight retriever 310 retrieves weights stored in an interleaved manner in the processor memory, where subsets of weights for a plurality of output neurons are stored sequentially in groups, enabling efficient sequential memory access for parallel processing. For example, weights corresponding to a first group of synapses for multiple neurons may be stored adjacently, followed by weights for the next group of synapses for the same neurons, facilitating streamlined weight retrieval aligned with the parallel execution of the input-weight multipliers 308.

The accelerator 356 includes input-weight multipliers 308 that multiply the weights from the weight registers 368 with the input data from the input registers 370. In some examples, the input-weight multipliers 308 include four multipliers, e.g., a first input-weight multiplier 308-1, a second input-weight multiplier 308-2, a third input-weight multiplier 308-3, and a fourth input-weight multiplier 308-4. Although four input-weight multipliers 308 are shown in FIG. 3, the number of input-weight multipliers 308 may be any number greater than four, such as twenty input-weight multipliers 308, forty input-weight multipliers 308, sixty input-weight multipliers 308, etc.

The organization of input-weight multipliers 308 and their associated data paths allows reuse of stable input data across multiple accumulator cycles while new weights are loaded sequentially for each concurrently processed neuron. In some examples, pruning is applied uniformly across groups of neurons corresponding to the number of multipliers (e.g., four or eight), such that the pruning granularity aligns with the architecture's parallelism and supports efficient reuse of loaded inputs.

The accelerator 356 includes a summation unit 372 configured to sum the results of the input-weight multipliers 308. The accelerator 356 includes accumulator registers 374 to receive the results of the summation unit 372, and an accumulator 376 to accumulate the contents of the accumulator registers 374. The accelerator 356 includes a bias adder 378 that receives the bias the bias fetcher 362 and adds the bias to the output of the accumulator 376. The accelerator 356 includes an activation function 380, and a multiplexer 382 configured to generate the output of the neural network layer. The accelerator 356 is configured to maintain input data stability across multiple accumulator cycles for a given group of neurons, reducing the frequency of input fetch operations and allowing the reuse of input vectors while cycling through weights for different neurons. This approach further contributes to efficient execution of heavily pruned networks by aligning memory access patterns with hardware parallelism, while minimizing redundant input loading.

The operation of the accelerator 356 generally includes the processing of multiple neurons (e.g. four as shown) over multiple synapses (i.e., weights). In the first cycle, four synapses associated with a first neuron are multiplied with four inputs (e.g., layer inputs) and the sum is stored in one of the accumulator registers 374. In the next cycle, a different set of synapses associated with a second neuron is multiplied with the (same) four inputs and the accumulated sum is stored in the next register of the accumulator registers 374. This process is repeated until all accumulator registers 374 are written. Once all accumulator registers 374 are written, a new set of four inputs for the first neuron are obtained, multiplied by weights, and accumulated with the previously stored register value. The process is continued until each node in the layer is computed. At this point, a bias is applied by the bias adder 378 to the neuron value and an activation function 380 to the neuron value before being applied to the multiplexer 382.

In some examples, the accelerator 356 allows software to control the neural network processing and either hardware or software to apply the activation function. The application of the activation function is configurable by selecting one of the inputs to the multiplexer 382. The upper input of the multiplexer 382 is selected when using hardware and the bottom input of the multiplexer 382 is selected when using software. When the activation function is applied in hardware, a write back of activation values is possible and a whole layer can be processed without interaction with the host processor (e.g., the processor 451 of FIG. 4). In operation, a bias may be fetched from the memory and adding the bias to the accumulated sum. Then, the activation function may be performed in hardware and the resulting neuron values are stored in memory. This process may repeat for other neurons in the layer. After a number of neurons have been processed and stored, an interrupt can be generated (by the counter logic 366) for the host processor (e.g., the processor 451 of FIG. 4). Upon receiving the interrupt and after updating the registers, the host processor (e.g., the processor 451 of FIG. 4) can restart the accelerator 356 again for the next layer and the process repeats until the complete neural network has been processed.

In some examples, the software configurability of the accelerator 356 allows optimization for sparse networks by adjusting the number of neurons processed concurrently, the precision of the input, weight, and output data, and the structure of memory accesses, including support for interleaved weight storage and selective input fetching based on the weight indication bitstream. These capabilities allow the accelerator 356 to execute neural networks efficiently with reduced power and memory bandwidth usage, particularly when processing networks with high sparsity levels.

FIG. 4 illustrates a neural network circuit 404 according to an aspect. The neural network circuit 404 may be an example of the neural network circuit 104 of FIGS. 1A to 1C and may include any of the details with respect to those figures. The neural network circuit 404 includes a processor memory 412, input/output (I/O) components 452, a processor data bus 454, an accelerator 456, and a processor 451. In some examples, the processor 451 is a host processor. In some examples, the neural network circuit 404 is a system on chip (SOC) (e.g., an integrated circuit coupled to a semiconductor substrate). In some examples, the neural network circuit 404 includes a plurality of accelerators 456 (e.g., multiple accelerators 456). In some examples, the neural network circuit 404 is part of a speech or sound recognition device. In some examples, the neural network circuit 404 is part of a hearing aid device. Although the following description relates to a speech or sound recognition device, the concepts discussed herein may be applied to other applications. In some examples, the neural network circuit 404 includes specialized hardware and control logic configured to efficiently execute pruned neural networks using selective input fetching, interleaved storage of weights, and parallel multiply-accumulate operations. This may enable the neural network circuit 404 to process sparse neural networks at reduced power and memory bandwidth while maintaining high throughput.

The neural network circuit 404 may receive input values from the I/O components 452 (e.g., a microphone) and to recognize the input values by processing a neural network trained to recognize particular input values as having particular meanings. For example, the input values may be Mel-frequency cepstral coefficients (MFCC) generated from an audio stream. In some examples, frames audio samples are captured periodically (e.g., every 10 milliseconds) and are transformed to the frequency domain for input to the neural network (e.g., the neural network 106 of FIG. 1A). In some examples tailored for sparse neural networks, the neural network circuit 404 may store weight data in an interleaved arrangement optimized for sequential memory access and may store the weight indication bitstream associated with input features such as MFCC coefficients. The accelerator 456 may selectively fetch and process only those inputs that correspond to non-pruned connections, reducing unnecessary computation and enabling power-efficient inference on input audio frames.

The processor 451 is coupled to the processor data bus 454. In some examples, the processor 451 may perform a portion (e.g., none, part) of the processing for the neural network via software running on the processor 451. The processor memory 412 is coupled to the processor data bus 454. In some examples, the processor memory 412 includes the memory devices 112 of FIGS. 1A to 1C and/or the memory device 212a and/or the memory device 212b of FIGS. 2A to 2C. The accelerator 456 is coupled to the processor data bus 454. The accelerator 456 may be an example of the accelerator 156 of FIGS. 1A to 1C, the accelerator 256 of FIGS. 2A to 2C, and/or the accelerator 356 of FIG. 3. In some examples, instead of using the processor data bus 454, the accelerator 456 and the processor memory 412 may communicate via a dedicated bus. In some examples, the accelerator 456 is configured to retrieve weights and inputs using access patterns that exploit interleaved storage and input skipping, allowing efficient use of shared memory and bus resources even in the presence of high sparsity levels in the neural network model. This architecture allows the accelerator 456 and the processor 451 to cooperate while minimizing contention for memory and bus bandwidth.

The accelerator 456 may perform a portion (e.g., all, part) of the processing for the neural network. In some examples, the accelerator 456 may use the same processor data bus 454 and the same processor memory 412 as the processor 451. The accelerator 456 may use the processor data bus 454 when it is not in use by the processor 451. For implementations in which tasks (e.g., computations) of the neural network are split between the accelerator 456 and the processor 451, the accelerator 456 may trigger the processor 451 to perform a task by generating an interrupt. Upon receiving the interrupt, the processor 451 may read input values from the (shared) processor memory 412, perform the task, write the results to the processor memory 412, and return control to (i.e., restart) the accelerator 456. In some examples, the accelerator 456 may process pruned neural network layers autonomously by efficiently skipping unused inputs and fetching only relevant weight and bias data, completing large portions of network inference with minimal processor intervention. When splitting tasks between the accelerator 456 and processor 451, the shared pruning information and memory layout enable seamless transitions and efficient division of labor between hardware and software processing paths.

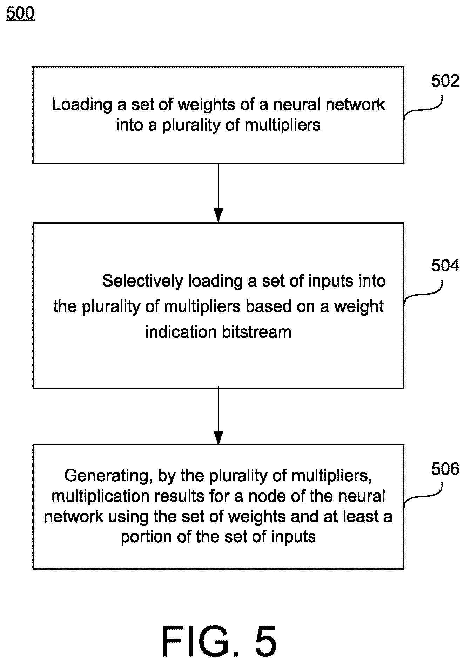

FIG. 5 illustrates a flowchart 500 depicting example operations of selectively loading input data for multiply-accumulate operations of a neural network according to an aspect. Although the flowchart 500 of FIG. 5 illustrates the operations in sequential order, it will be appreciated that this is merely an example, and that additional or alternative operations may be included. Further, operations of FIG. 5 and related operations may be executed in a different order than that shown, or in a parallel or overlapping fashion.

Operation 502 includes loading a set of weights of a neural network into a plurality of multipliers. Operation 504 includes selectively loading a set of inputs into the plurality of multipliers based on a weight indication bitstream. Operation 506 includes generating, by the plurality of multipliers, multiplication results for a node of the neural network using the set of weights and at least a portion of the set of inputs.

In some examples, the operations include receiving a weight indication bitstream that specifies which of the weights are to be active for a given node of the neural network. The weight indication bitstream may be stored in a memory device and provided to the multipliers in parallel with the set of weights. Each bit of the weight indication bitstream may correspond to a respective weight, thereby allowing the accelerator to determine whether the corresponding weight should be used in a multiplication or whether the associated input should be bypassed. This approach reduces unnecessary computations by ensuring that only the active weights contribute to the multiplication results.

In some examples, the operations include selectively loading inputs into the multipliers in accordance with the weight indication bitstream, where the accelerator avoids fetching and processing inputs corresponding to pruned or inactive weights. This selective input loading reduces memory bandwidth and lowers power consumption, particularly in cases where a substantial fraction of the weights are deactivated. In some examples, the operations include generating multiplication results in parallel across the plurality of multipliers. Each multiplier may receive a weight from the set of weights and an input from the selectively loaded set of inputs, thereby producing a partial product that represents a contribution of the corresponding weight-input pair to the value of a node in the neural network. The multiplication results may be accumulated, combined with a bias value, and applied to an activation function to generate an output value for the node. By aligning the weight indication bitstream with the set of multipliers, the accelerator achieves high throughput execution while avoiding wasted multiplications. The combination of these operations provides several technical advantages. Selectively loading inputs based on the weight indication bitstream reduces redundant multiply operations, which lowers dynamic power consumption and shortens execution cycles. In some examples, use of a second memory device to buffer active inputs reduces traffic to the first memory device and minimizes memory latency, thereby improving overall throughput. Furthermore, generating multiplication results only for active weights enables the accelerator to support sparse neural network models efficiently, allowing larger networks to be deployed on edge devices with limited compute and power budgets.

In some examples, the techniques described herein may yield performance improvements and memory efficiencies for executing pruned neural networks. For example, pruning a neural network to a sparsity level of approximately 75% may enable a reduction in cycle count by approximately 4× relative to an unpruned network, while pruning to a sparsity level of approximately 87.5% may enable a reduction in cycle count by approximately 8× relative to an unpruned network, assuming similar memory fetch conditions and hardware configurations. Additionally, the storage of the weight indication bitstream introduces a relatively low memory overhead that scales with sparsity and the number of accumulators; for instance, when using 8 accumulators, the memory overhead for the bitstream may be approximately 3.125% at 50% sparsity, 6.25% at 75% sparsity, and 12.5% at 87.5% sparsity. These performance and efficiency gains may allow execution of larger sparse networks that outperform smaller dense networks at comparable power and cycle budgets, which is particularly advantageous for battery-powered or low-power devices such as hearing aids and earbuds.

In the specification and/or figures, typical embodiments have been disclosed. The present disclosure is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

Unless defined otherwise, all technical and scientific terms used herein have the same meaning as commonly understood by one of ordinary skill in the art. Methods and materials similar or equivalent to those described herein can be used in the practice or testing of the present disclosure. As used in the specification, and in the appended claims, the singular forms "a," "an," "the" include plural referents unless the context clearly dictates otherwise. The term "comprising" and variations thereof as used herein is used synonymously with the term "including" and variations thereof and are open, non-limiting terms. The terms "optional" or "optionally" used herein mean that the subsequently described feature, event or circumstance may or may not occur, and that the description includes instances where said feature, event or circumstance occurs and instances where it does not. Ranges may be expressed herein as from "about" one particular value, and/or to "about" another particular value. When such a range is expressed, an aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

While certain features of the described implementations have been illustrated as described herein, many modifications, substitutions, changes, and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or subcombinations of the functions, components, and/or features of the different implementations described.

## Claims

1. A method comprising:
loading a set of weights of a neural network into a plurality of multipliers;
selectively loading a set of inputs into the plurality of multipliers based on a weight indication bitstream; and
generating, by the plurality of multipliers, multiplication results for a node of the neural network using the set of weights and at least a portion of the set of inputs.

2. The method of claim 1, further comprising:
loading a first input of the set of inputs to a first multiplier of the plurality of multipliers based on a first bit of the weight indication bitstream having a first value;
not loading a second input of the set of inputs to a second multiplier of the plurality of multipliers based on a second bit of the weight indication bitstream having a second value; and
generating, by the first multiplier, a first multiplication result using the first input and a corresponding weight of the set of weights.

3. The method of claim 2, further comprising:
loading a third input of the set of inputs into the second multiplier based on a third bit of the weight indication bitstream having the first value;
generating, by the second multiplier, a second multiplication result for the node using the third input and a corresponding weight of the set of weights, wherein the second multiplication result is computed at least partially in parallel with the first multiplication result; and
summing the first multiplication result and the second multiplication result.

4. The method of claim 2, wherein the set of inputs is a first set of inputs, the method further comprising:
loading a second set of weights into the plurality of multipliers; and
generating, by the first multiplier, a second multiplication result for the node of the neural network using the first input and a corresponding weight of the second set of weights.

5. The method of any one of claims 1 to 4, wherein the weight indication bitstream includes a sequence of bits indicating which weights are stored in a memory device of a computing device.

6. The method of any one of claims 1 to 5, further comprising:
storing the set of weights and the set of inputs in a first memory device;
transferring the set of inputs from the first memory device to a second memory device;
retrieving the set of weights from the first memory device; and
retrieving the set of inputs from the second memory device.

7. The method of claim 6, wherein the set of inputs are retrieved from the second memory device at least partially in parallel with retrieval of the set of weights from the first memory device.

8. The method of claim 6, further comprising:
retrieving a first portion of the set of weights using a first memory data interface connected to the first memory device; and
retrieving a second portion of the set of weights using a second memory data interface connected to the first memory device.

9. A computer program product having executable instructions that cause at least one processor to execute operations of any one of claims 1 to 8.

10. A neural network circuit comprising:
at least one memory device configured to store a weight indication bitstream; and
an accelerator of a neural network configured to:
load a set of weights into a plurality of multipliers;
selectively load a set of inputs into the plurality of multipliers based on the weight indication bitstream, including:
load a first input of the set of inputs to a first multiplier of the plurality of multipliers based on a first bit of the weight indication bitstream having a first value; and
not loading a second input of the set of inputs to a second multiplier of the plurality of multipliers based on a second bit of the weight indication bitstream having a second value; and
generate, by the first multiplier, a multiplication result for a node of the neural network using the first input and a corresponding weight of the set of weights.

11. The neural network circuit of claim 10, wherein the multiplication result is a first multiplication result, wherein the accelerator is configured to:
load a third input of the set of inputs into the second multiplier based on a third bit of the weight indication bitstream having the first value;
generate, by the second multiplier, a second multiplication result for the node using the third input and a corresponding weight of the set of weights, wherein the second multiplication result is computed at least partially in parallel with the first multiplication result; and
sum the first multiplication result and the second multiplication result.

12. The neural network circuit of claim 10 or 11, wherein the at least one memory device includes a first memory device and a second memory device, the first memory device configured to store the set of weights, the second memory device configured to store the set of inputs, wherein the accelerator is configured to:
retrieve the set of weights from the first memory device; and
retrieve the set of inputs from the second memory device,
wherein the accelerator is configured to retrieve the set of weights from the first memory device at least partially in parallel with retrieval of the set of inputs from the second memory device.

13. The neural network circuit of claim 12, wherein the accelerator is configured to retrieve a first portion of the set of weights using a first memory data interface connected to the first memory device and retrieve a second portion of the set of weights using a second memory data interface connected to the first memory device.

14. The neural network circuit of claim 12, wherein the node is a first node, and the set of weights is a first set of weights, the first memory device configured to store a plurality of weights in an interleaved manner such that the first set of weights associated with the first node are stored, followed by a first set of weights associated with a second node, followed by a second set of weights associated with the first node.

15. The neural network circuit of claim 12, wherein the set of inputs is a first set of inputs, and the multiplication result is a first multiplication result, wherein the accelerator is configured to:
load a second set of weights into the plurality of multipliers; and
generate, by the first multiplier, a second multiplication result for the node of the neural network using the first input and a corresponding weight of the second set of weights.
